# EUROPEAN PATENT APPLICATION

(11) **EP 3 942 966 A1**
(43) Date of publication of application: **26.01.2022**
(21) Application number: 20187034.2
(22) Date of filing: 21.07.2020
(51) Int. Cl.: A46B 9/02, A46B 3/00, B33Y 10/00

(54) **APPLICATOR WITH A FLEXIBLE BASKET AS BRISTLE CARRIER**

(71) Applicant: GEKA GmbH, 91572 Bechhofen (DE)
(72) Inventor: ETTLIN, José, 9453 Eichberg (CH); HEGELE, Isabel, 73433 Aalen (DE); VON JAN, Erika, 91154 Roth (DE)
(74) Representative: Misselhorn, Hein-Martin

(57) **Abstract**

The invention concerns an applicator (1) with a plurality of bristle carriers (2, 3, 4) which are occupied by bristles (11) projecting outwards - preferably substantially in a radial direction - from them, characterised in that each of the bristle carriers (2, 3, 4) forms a helix, which in the unloaded state winds at a distance around the imaginary central longitudinal axis (L) of the applicator (1) and the helices meet at the free front end of the applicator (1) and are integrally connected to one another there, the applicator (1) preferably being designed in such a way that at the end opposite the free front end of the applicator (1) the helices merge integrally into a stem or into a coupling element (5) for coupling the stem.

## Description

The invention concerns an applicator with several bristle carriers according to the generic term of claim 1.

### TECHNICAL BACKGROUND

There is still a significant need for applicators that have a high mass storage capacity on the one hand, and that can be easily adapted to the surface to be applied on the other.

A high mass storage capacity is usually attempted to achieve by means of bristles with a correspondingly stiff design. When the applicator is pulled out, stiff bristles are only weakly stripped by the wiper placed in the bottle neck, especially in the bristle base area. However, a stiff bristle is only slightly cuddly. In this respect there is a conflict of aims with most known designs.

To remedy this, applicators are increasingly being used which can store mass in two planes. Such applicators store mass in the area of their bristles. A further amount of mass is stored by such applicators inside their bristle carrier or core.

However, it is still difficult to squeeze the mass stored in the core of the bristle carrier out at exactly the time when it is needed outside in the area of the bristles.

In order to achieve this, there is nothing else left to do but to make the bristle carrier, in whose interior additional mass is to be stored, relatively soft - so that it can be easily compressed to squeeze out the mass stored in it.

Such soft bristle carriers usually show an application behaviour which is perceived as too indifferent. The known applicators give the user only little haptic feedback as to when they are sufficiently deformed that they will now release additional mass previously stored in the bristle carrier. Therefore, it is not uncommon for the known applicators to unintentionally release additional mass from the interior of the bristle carrier as soon as the user tries to incorporate and distribute the mass that has been available up to now.

### OBJECT OF THE INVENTION

Accordingly, it is the object of the invention to create an applicator that can store a relatively large amount of mass, that can release it in a well controllable manner and that is cuddly.

### INVENTIVE SOLUTION

The inventive solution is made with the features of claim 1.

An applicator with several bristle carriers - usually independent of each other over the applicator area - is suggested. The bristle carriers are fitted with bristles that protrude outwards from them.

The applicator according to the invention is characterized by the fact that each of the bristle carriers forms a helix. In the unloaded state, this helix winds around the imaginary central longitudinal axis of the applicator. The helices meet at the free front end of the applicator. There they merge into each other forming one integral piece. The applicator is preferably designed in such a way that the helices also merge into a stem or a coupling element for coupling the stem at the end opposite the free front end of the applicator.

The term "bristles" has two meanings in the sense of the invention. Preferably it has its classical meaning. It then designates rod-shaped, often slightly conical elements. These elements are flexible. They fold over, for instance when the applicator is pulled out of the cosmetic supply container thereby passing the wiper. But the term "bristles" also has another meaning. It also includes structures which are usually called spikes or protrusions. These structures usually show little or no flexibility. This means that they are only slightly bent or not bent at all when passing through the wiper.

The fact that the part of the applicator which carries the bristles is formed by several helix-like bristle carriers and that these helix-like bristle carriers are integrally connected to each other at the ends - seen as a whole - creates a dimensionally stable bristle carrier basket. It has a pronounced elasticity due to its proximity to the nature of a spiral spring. It gives a clear haptic feedback when it begins to deform under the forces applied during application and when it begins to release further mass by now stored in core or bristle carrier of the applicator. Once these forces have been released, the springlike structure returns completely to its initial position.

The helix-like bristle carriers together enclose an interior space. An increased amount of cosmetic mass can be stored in this interior space. It can enter this interior space through the spiral-shaped slits which define the distance between directly successive helix-shaped bristle carriers. By deflecting the helix-shaped bristle carriers, the mass stored in the interior space defined by them can easily be pushed back into the area of the bristles.

The flexibility of the applicator and its ability to promptly release the mass it has stored can be adjusted extremely sensitively. Important parameters are here, individually or in combination:
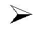 the number of turns that each helix-like bristle carrier forms, preferably 2 to 6 turns
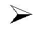 is the distance between two successive helical bristle carriers, preferably 1 mm up to 4 mm, better 1,2 mm up to 3 mm
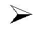 and the dimensioning of the cross-section of the respective helix-like bristle carriers, preferably rectangular, with a dimensioning in the range (up to 3,5 mm x up to 1,75 mm) better in the range (up to 3 mm x up to 1,3 mm).

### OPTIONAL DESIGN POSSIBILITIES

A highly preferred way of further developing the invention is for the applicator to have at least one supporting helix. In the unloaded state, the supporting helix winds around the imaginary central longitudinal axis of the applicator at a distance, but in opposite direction compared to the helix-like bristle carriers. The supporting helix supports the bristle carrier from the inside.

Such a supporting helix crosses - on its way from the free end of the applicator to its opposite end - the path of each helix-like bristle carrier several times. It can therefore form a support structure that effectively prevents only a single turn of the bristle carrier from being locally pressed inwards when only punctual force is applied - while the adjacent turns are unaffected and the applicator becomes unstable as a result. Instead of allowing excessive local deformation, such a support structure tends to deform the applicator more as a whole, even when only local force is applied from outside. This prevents the applicator from collapsing unexpectedly by the user. The elastic behaviour of the applicator during application and snug-fitting remains easily calculable.

A moderate increase in stiffness is achieved when the outer circumferential surface of at least one support helix is in contact with the inner circumferential surface of the helix-like bristle carrier from the inside, but is not integrally connected to it.

A greater increase in stiffness is achieved if the at least one supporting helix and the respective bristle carrier are integrally connected to each other where their paths cross. Naturally, variations are conceivable here in order to achieve a fine adjustment. For example, it can be useful if the support helix and the respective bristle carrier are only connected to each other in one piece at every second or third of their crossing points and otherwise, i.e. at the remaining crossing points, they merely lie against each other unconnected.

In all these cases it had proved to be favourable if the number of support helices corresponds to the number of bristle carriers formed as a helix.

Ideally, a helix-forming bristle carrier and/or a supporting helix should have the shape of a strip with a substantially rectangular cross-section. Typically, the extension of such a strip in the circumferential direction is greater, usually at least by a factor of 3, better at least by a factor of 4, than the extension of such a strip in the radial direction.

It has proved to be particularly advantageous if the applicator has a support rod inside the space bounded by the bristle carriers and, if any, also the at least one support helix. In the unloaded state, the free space between the bristle carriers and the at least one support helix on the one hand and the support rod on the other hand remains. The support rod has two essential functions simultaneously or alternatively:
On the one hand, it limits the flexible yielding of the bristle carriers - if the bristle carriers are deformed to a greater extent, they will not deform much further.

On the other hand, the support rod helps to push out stored cosmetic mass on the side where this mass is needed.

As long as the support rod is missing, there is always the danger - when the applicator is going to be deformed or laterally compressed - that the cosmetic mass is pressed out on the side of the applicator that is not in contact with the area to be applied. Of course, such a dispensing of mass does not help or is at least cumbersome, as the applicator has to be turned first in order to be able to really use the dispensed mass. As soon as the support rod is installed the conditions change. Now, if the applicator is deformed or laterally compressed, the majority of the mass is preferably dispensed exactly on the side where the applicator is in contact with the part to be applied. This is because the space between the bristle carrier and the support rod is reduced on this side. However, the cosmetic mass stored there cannot now escape to the opposite side. Instead, it is dammed up by the support rod and thus forced to escape towards the side from which the pressure on the cosmetic applicator originates.

It is particularly advantageous if the support rod extends only part of the length of the space enclosed by the bristle carriers and, where appropriate, at least one support helix. This is because two sections are then formed on the applicator which differ significantly in their flexibility. In this way, the user obtains an extremely flexible tip section of the applicator, which is followed by a much less flexible section of the applicator.

Ideally, the support bar should extend over less than or equal to 80 % of the length of the enclosed space, and in less favoured cases at least less than or equal to 70 %.

Ideally, the maximum diameter of the bristle carrier basket formed by the bristle carriers should decrease at least towards one free end. Preferably it decreases towards both ends. This means that the pressure on the applicator and the resulting elastic deformation of the applicator can be used to determine the length of the contact zone over which the applicator develops its application effect. With little pressure, the applicator contacts the application area mainly with its center. If the pressure is increased, the length over which the applicator can develop its application effect increases, since the length of the contact zone between the application area and the applicator increases.

Further advantages, further modes of action and further possibilities for the design of the invention result from the preferred embodiment described using the figures.

### LIST OF FIGURES

Figure 1 shows an example of the design of a preferred embodiment according to the invention in side view.
Figure 2 shows the example according to Figure 1 in slightly perspective view and enlarged.

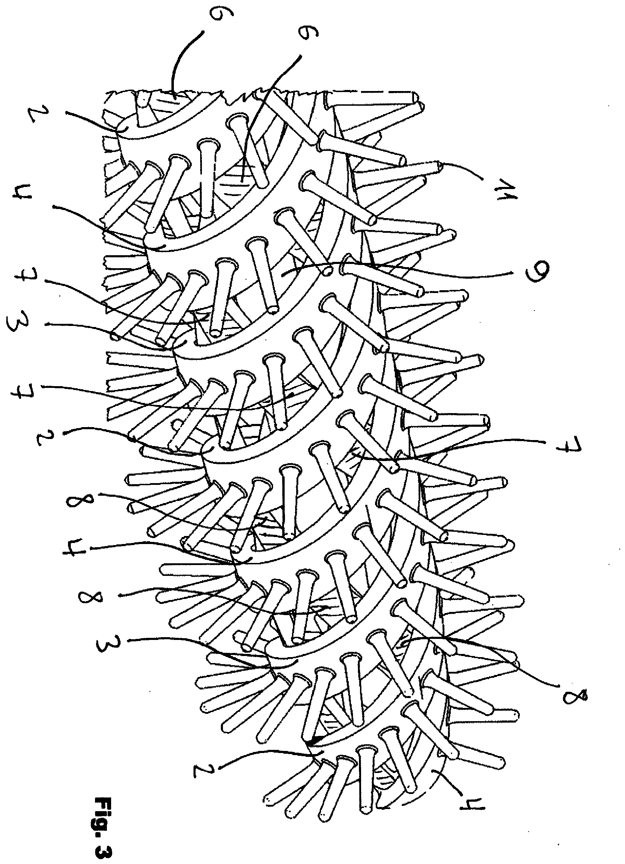

Figure 3 shows a further enlarged section of figure 2.

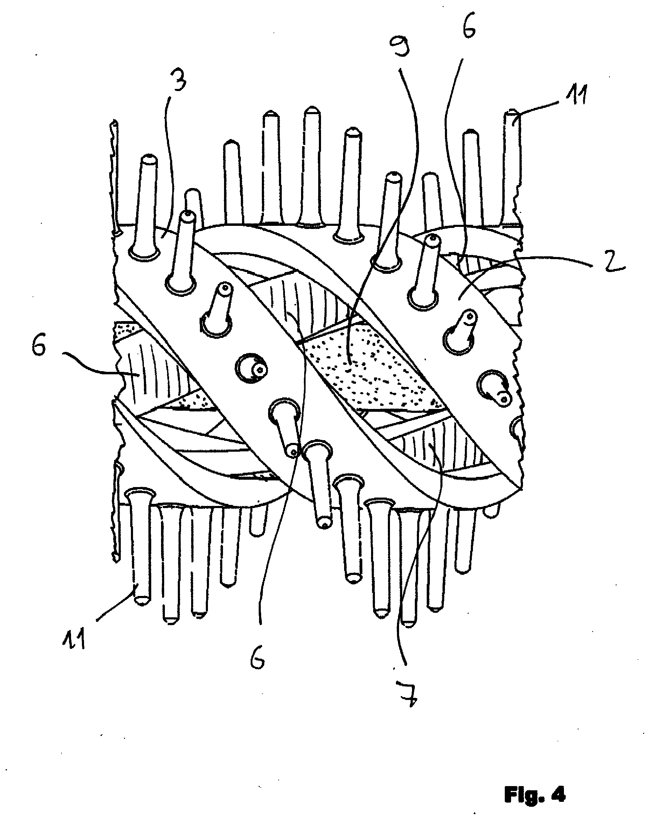

Figure 4 shows a further enlarged section of figure 2.

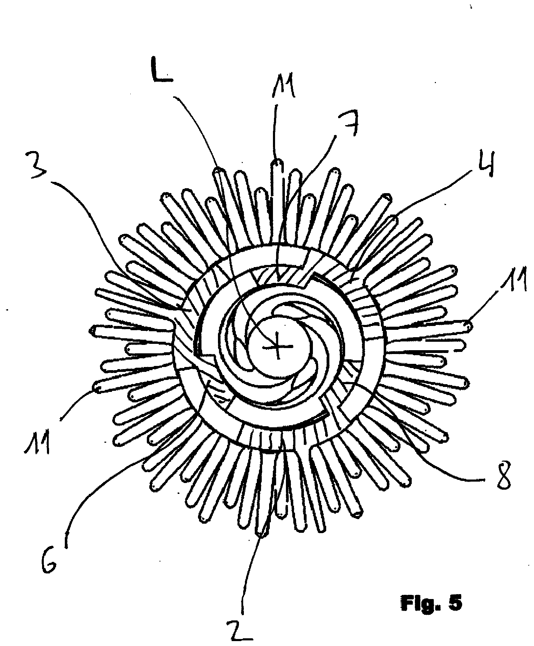

Figure 5 shows a central cross-section of the design according to Figure 1.
Figure 6 shows a central longitudinal section of the design according to Figure 1.
Figure 7 shows a second preferred embodiment in side view.
Figure 8 shows the embodiment according to Figure 7 in slightly perspective view and enlarged.
Figure 9 shows a central longitudinal section of the design according to Figure 7.
Figure 10 shows a frontal view of the applicator according to Figure 7

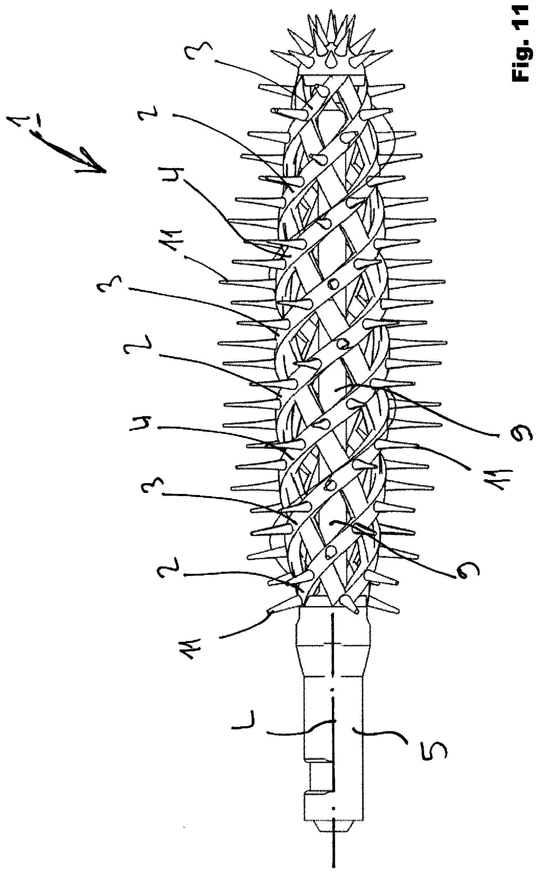

Figure 11 shows a third preferred embodiment in side view.

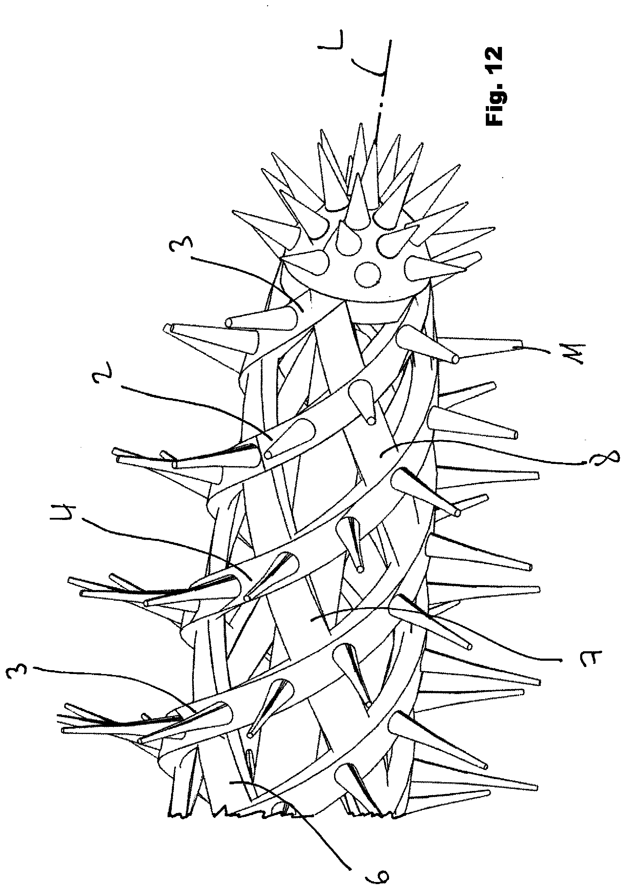

Figure 12 shows the embodiment according to Figure 11 in slightly perspective view and enlarged.

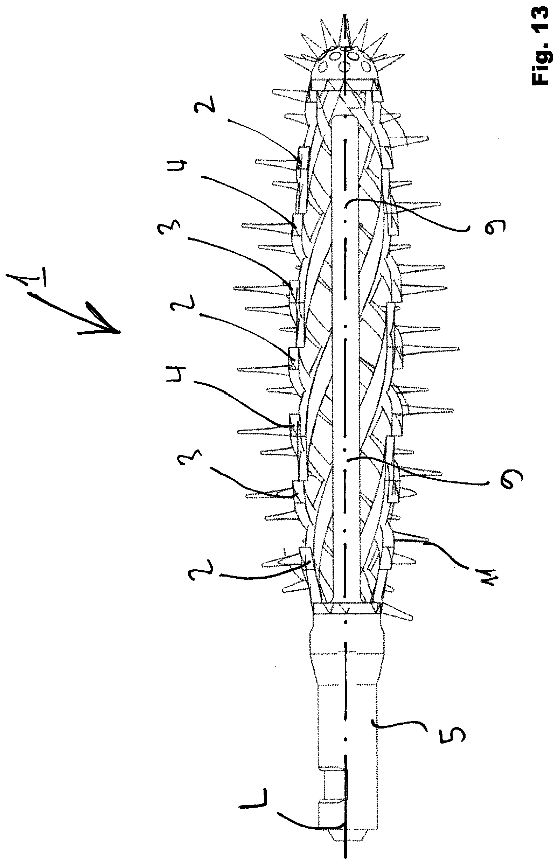

Figure 13 shows a central longitudinal section of the design according to Figure 11.

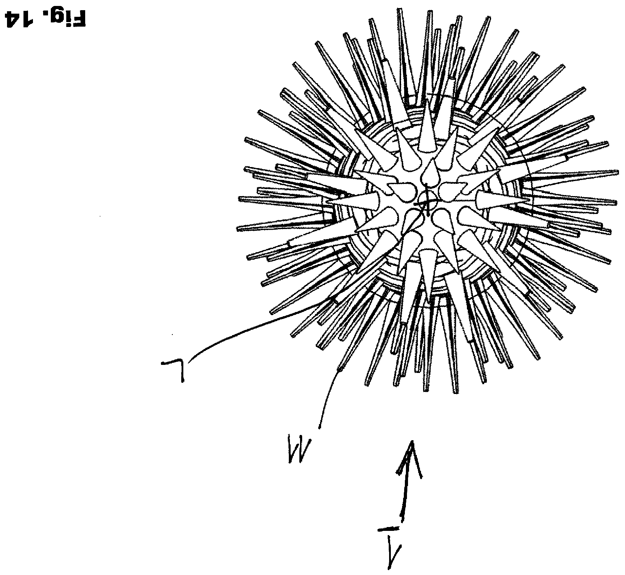

Figure 14 shows a frontal view of the applicator according to Figure 11

### PREFERRED EMBODIMENT OF THE INVENTION

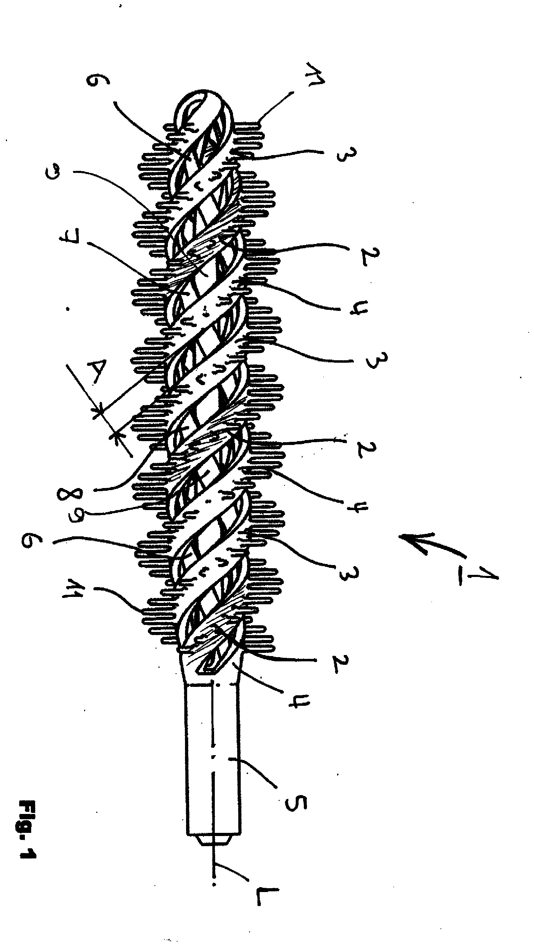

Figure 1 gives the best overview of the preferred embodiment used to describe the details of the invention.

It is particularly favourable if the applicator 1 according to the invention has between three and six bristle carriers which are predominantly independent from neighboured bristle carries along the length of the applicator. Three bristle carriers are ideal. The applicator shown here as an example is designed accordingly.

His first bristle carrier 2 is shown slightly hatched for a better overview. It is easy to see how the first bristle carrier 2 begins at the transition which joins the coupling piece 5, which is intended for connection to the stem or cap not shown.

If one looks from right to left, starting from this first bristle carrier 2 in the area of the mentioned transition, then one can see the second bristle carrier 3 of the applicator. If one looks further from right to left, then the third bristle carrier 4 catches one's eye.

All bristle carriers start at the said transition, which here connects to the coupling piece 5. The starting points of the three bristle carriers at this transition are offset by 120° to each other. Each bristle carrier emerges integrally in one piece from the said transition and is connected to it accordingly.

Each of bristle carriers 2, 3, 4 is formed by a strip whose length is preferably at least 25 times greater than its width.

This strip forms a helix which winds around the longitudinal axis L of the applicator. Each of the bristle carriers 2, 3, 4 winds around the longitudinal axis L of the applicator at least twice, here even at least 2.5 times. Together the bristle carriers 2 to 4 finally form a kind of multi-way or (here) three-way thread.

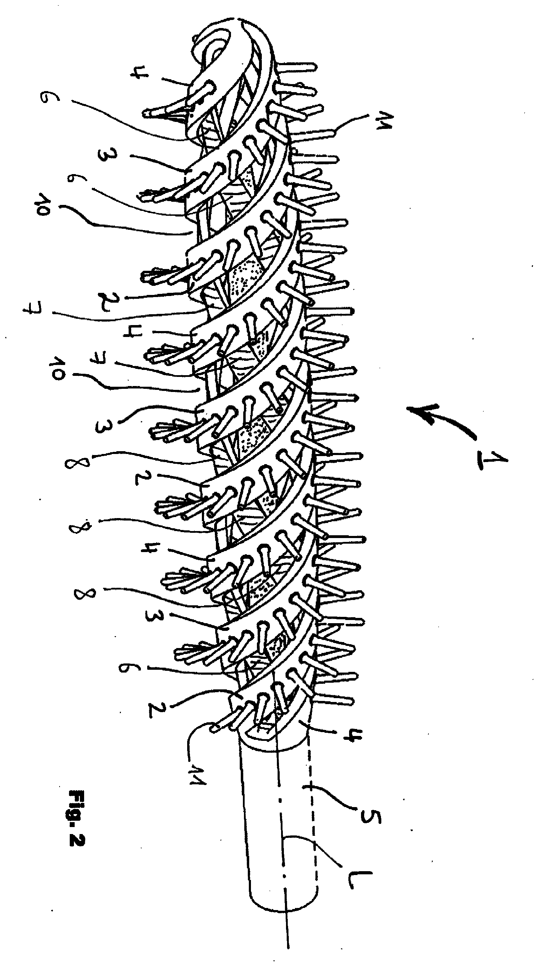

Directly successive bristle carriers 2, 3, 4 preferably maintain continuously the distance A from each other as shown in Fig. 1 - apart from the start and/or end area where they may come closer to each other. This leaves spaces 10 between the bristle carriers 2, 3, 4, see Fig. 2. Mass can penetrate into the interior of the applicator via these spaces 10 and can also be released again through these spaces.

As one can see, each bristle carrier 2, 3, 4 preferentially carries bristles 11, which preferably extend at least essentially radially away from it. The length of each bristle 11 is typically greater than the width of its bristle carrier 2, 3, 4, and in many cases bristles 11 will be tapered. Preferably, each bristle carrier carries only two and ideally only one row of bristles 11. It is particularly advantageous if the bristles 11 are positioned one behind the other in an alignment along the wound central longitudinal axis of the respective bristle carrier. Ideally, each bristle is a one-piece integral part of the bristle carrier carrying it.

Bristle carriers 2, 3 and 4 meet at the free end of the applicator. There they can form a kind of closed cap or half-cap or half-shell, into which they each merge integrally into one another. Alternatively the bristle carriers 2, 3, 4 can also meet in the manner of a multi- or (here) 3-ray star, whereby they also meet and are integrally connected to each other.

In this way, bristle carriers 2, 3 and 4 together form a one-piece bristle carrier basket, which is hollow inside, carries the bristles on its outer circumference and has a resilient characteristic. In particular, such a basket always returns reliably to its initial position after a load has been applied. On the other hand, it can store a remarkable amount of cosmetic mass in its interior.

A significant improvement in the deformation behaviour of the applicator is achieved by providing at least one support helix, which in the unloaded state also winds around the central longitudinal axis L of applicator 1 at a distance but in the opposite direction compared to the bristle carriers 2, 3, 4.

In the example illustrated here by the figures, not only a single support helix is provided. Instead, the number of support helices here corresponds to the number of helical bristle carriers. Therefore three support helices 6, 7 and 8 are provided. These three support helices 6, 7 and 8 can be seen relatively well in Figure 1. Contemplating Figure 1 one can also see that the support helices cut the path of the helical bristle carriers preferably at a (at least essentially) right angle due to their opposite winding. Thereby the support helices 6, 7, 8 pass the helical bristle carriers 2, 3, 4 on the inside.

In this preferred embodiment, the support helices 6, 7, 8 are preferably integrally connected to a helical bristle carrier 2, 3 or 4 at every point where they cross it. This creates a net-like spatial connection between the helical bristle carriers 2, 3, 4 and the support helices 6, 7, 8. Such an applicator basket is sufficiently rigid, but no longer has a tendency to collapse completely under overload.

Not shown figuratively is how the support helices 6, 7, 8 begin at the free end of the applicator. Each of the support helices 6, 7, 8 branches off in one piece integrally from the inner surface of one of the helical bristle carriers 2, 3, 4 and begins its winding course there. At the end, on the side of the coupling 5, each of the support helices merges again integrally and in one piece into the inner surface of one of the helical bristle carriers 2, 3, 4. These support helices 6, 7, 8 can be easily recognized, in particular in Figure 2, where they are highlighted by cross-hatching.

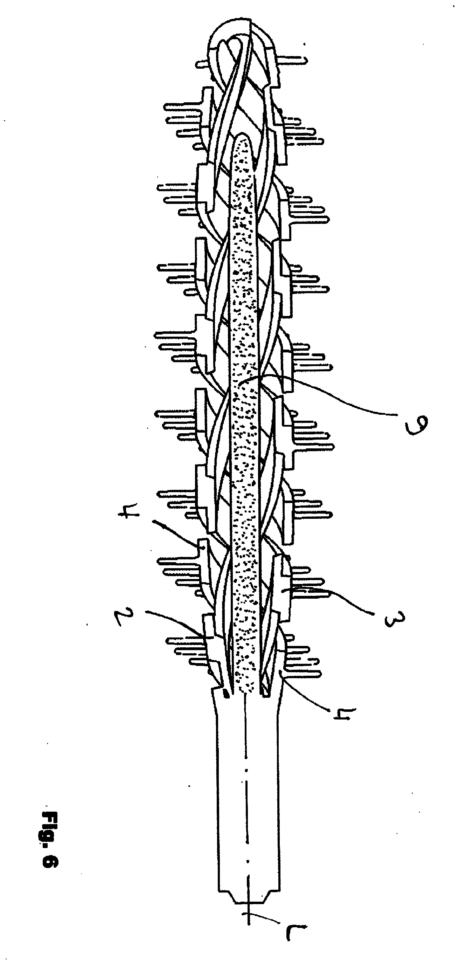

Figure 2 also shows the so-called supporting core 9, which fills the centre of the space bounded by the helix-like bristle carriers 2, 3, 4 and, if any, the at least one supporting helix 6, 7, 8. Mostly the support core has a rod-like shape. Preferably it is a cylindrical rod. In Figure 2 the supporting core 9 can be recognized by its dotting. An even clearer picture is provided by the longitudinal section in the shape of Figure 6. As can be seen quite clearly, in unloaded state an almost annular cylindrical space remains between the helical bristle carriers 2, 3, 4, the at least one supporting helix 6, 7, 8 and the supporting core 9.

On the basis of Figure 6 the following can be understood quite well:
If a vertical force acts from above on the bristle carriers 2, 3, 4 of the applicator 1, then the bristle carriers 2, 3, 4 are pressed in direction towards the support core 9. The mass previously stored in the said annular cylindrical space comes under pressure. However, it cannot simply escape downwards and possibly escape on the opposite side. Instead, it is stowed by the supporting core 9. Thus mass increasingly escapes in vertical direction upwards or diagonally upwards. An increased portion of the escaping mass is thus discharged directly into the application zone.

It is also easy to see that the supporting core 9 limits the flexion of the bristle carriers and of the at least one supporting core as soon as it becomes so strong that the said components come to rest on the supporting core 9.

The supporting core 9 can optionally be flexible itself, so that it does not prevent further flexion but only reduces it.

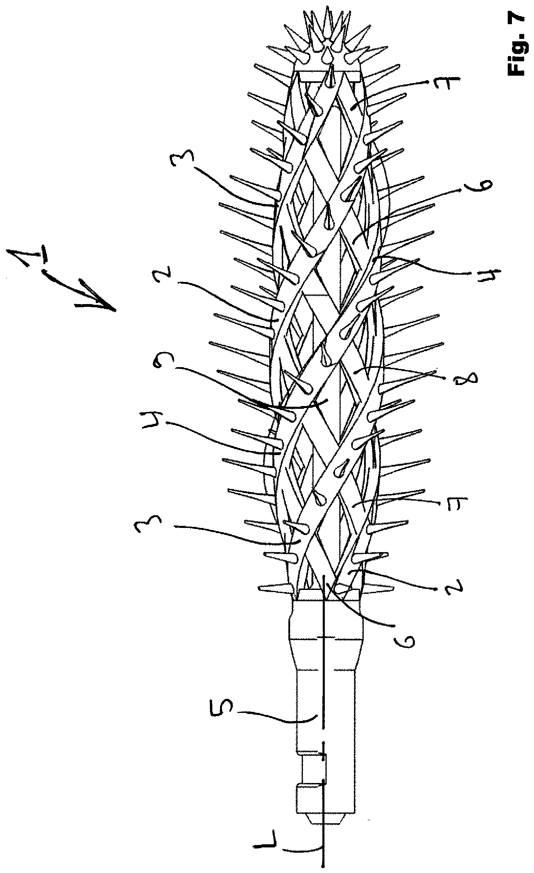

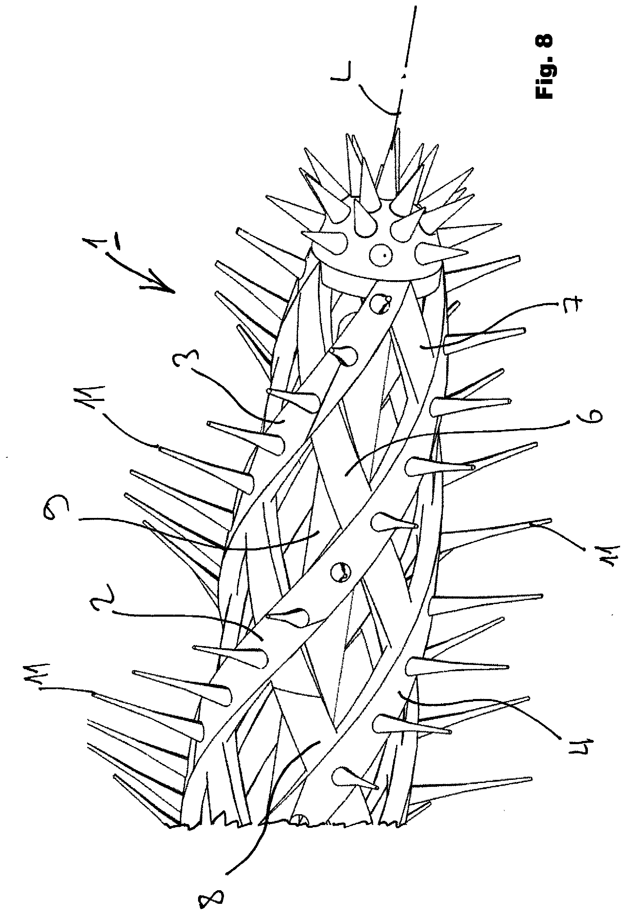

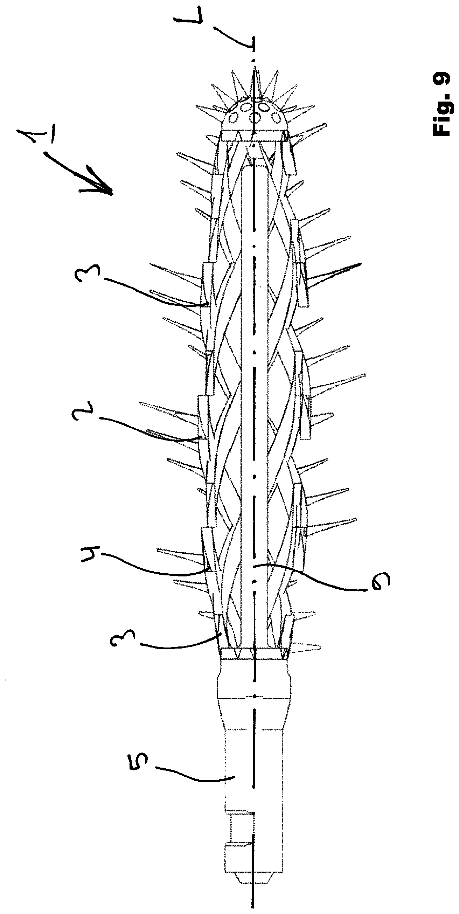

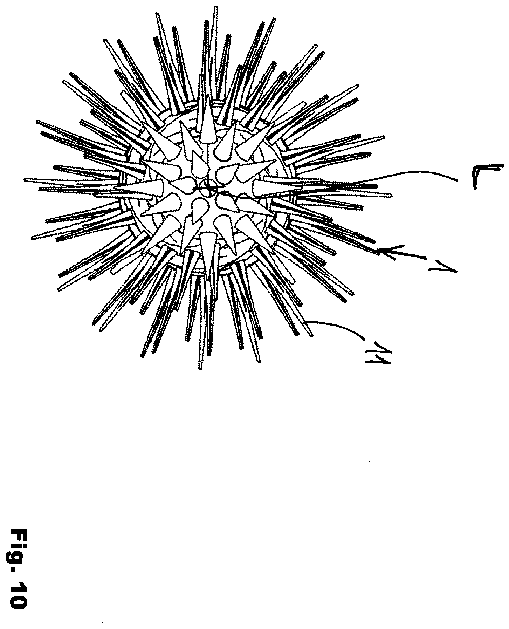

The Figures 7 to 10 show a second embodiment. This embodiment is identical to the first embodiment so that all that has been disclosed for the first embodiment applies to the second embodiment, too.

The differences are as follows:
The tread pitch may be steeper so that the numer of turns performed by the bristle carrier around the central axis is less.

The bristles may be more conical, so that their tip diameter becomes smaller.

The bristle carries may be not fully passed by by the support helices, instead the bristle carriers and the support helices partially intersect each other when they cross.

The frontal cap forming the free end of the applicator may form a semi-cup-like structure which may carry itself a set of bristles extending not radially but oblique to the longitudinal axis of the applicator.

### GENERAL REMARKS

Additive manufacturing is the preferred method for manufacturing.

The materials which are used for additive manufacturing (DLP and Stereolithography) are UV-based systems. They are shaped by curing the projected shape layer by layer with UV light. The wave lengths can vary (e.g. 365nm, 385nm, 405nm).

Preferred application fields for the inventive applicator are skincare and healthcare, i. e. to apply medicine on the skin or inside the body, addencare, i. e. to distribute adhesives more precisely, apply adhesives on rough surfaces and dental, i. e, using the specific applicator features to treat tooth roots, apply medicine, interdental micro brushes.

### LIST OF REFERENCE SIGNS

- 1: applicator
- 2: first bristle carrier
- 3: second bristle carrier
- 4: third bristle carrier
- 5: coupling or coupling piece
- 6: support helix
- 7: support helix
- 8: support helix
- 9: support core
- 10: gap
- 11: bristle

A Distance between two bristle carriers arranged directly one after the other
- L: Applicator longitudinal axis

## Claims

1. Applicator (1) with a plurality of bristle carriers (2, 3, 4) which are occupied by bristles (11) projecting outwards - preferably substantially in a radial direction - from them, **characterised in that** each of the bristle carriers (2, 3, 4) forms a helix, which in the unloaded state winds at a distance around the imaginary central longitudinal axis (L) of the applicator (1) and the helices meet at the free front end of the applicator (1) and are integrally connected to one another there, the applicator (1) preferably being designed in such a way that at the end opposite the free front end of the applicator (1) the helices merge integrally into a stem or into a coupling element (5) for coupling the stem.

2. Applicator (1) according to claim 1, **characterized in that** directly successive helices, viewed in the direction of the longitudinal axis (L) of the applicator, are spaced apart by a distance (A).

3. Applicator (1) according to claim 1 or 2, **characterized in that** the applicator (1) has at least one supporting helix (6, 7, 8) which, in the unloaded state, winds around the imaginary central longitudinal axis (L) of the applicator (1) at a distance but in opposite direction (being counter rotating that way) compared to the bristle carriers and supports the bristle carriers (2, 3, 4) from the inside.

4. Applicator (1) according to claim 3, **characterized in that** the number of counter-rotating support helices (6, 7, 8) corresponds to the number of bristle carriers (2, 3, 4) formed as a helix.

5. Applicator (1) according to claim 3 or 4, **characterized in that** a supporting helix (6, 7, 8), where the path of the supporting helix and a bristle carrier intersect, is in abutment from the inside against said bristle carrier.

6. Applicator (1) according to claim 3 or 4, **characterized in that** a support helix, where the path of the support helix and a bristle carrier intersect, is integrally connected to said bristle carrier.

7. Applicator (1) according to one of the preceding claims, **characterized in that** a helix-forming bristle carrier (2, 3, 4) and/or the at least one supporting helix (6, 7, 8) has the shape of a strip with a substantially rectangular cross-section with flanks running locally parallel to one another preferably over the predominant or substantially entire length of the applicator.

8. Applicator (1) according to one of the preceding claims, **characterized in that** the applicator has a support core (9) in the space enclosed by the bristle carriers (2, 3, 4) and optionally also the at least one support helix (6, 7, 8), wherein in the unloaded state there is a free space between the bristle carriers and the at least one support helix on the one hand and the support rod (9) on the other hand.

9. Applicator according to claim 8, **characterized in that** the support core (9) extends only over a part of the length of the enclosed space, preferably over less than or equal to 80% of the length of the enclosed space.

10. Applicator according to any of the preceding claims, **characterized in that** the maximum outer diameter of the bristle carrier basket defined by the bristle carriers (2, 3, 4) in their entirety decreases at least towards the free end, preferably towards both ends, measured on the outer surface of the bristle carriers.
